(19) Europäisches Patentamt
European Patent Office
Office européen des brevets

(11) **EP 2 641 065 B1**

(12) **EUROPÄISCHE PATENTSCHRIFT**

(45) Veröffentlichungstag und Bekanntmachung des Hinweises auf die Patenterteilung:
**01.04.2015   Patentblatt 2015/14**

(21) Anmeldenummer: **11815692.6**

(22) Anmeldetag: **18.11.2011**

(51) Int Cl.:
**G01N 9/00** *(2006.01)*     **G01F 1/84** *(2006.01)*
**G01F 1/74** *(2006.01)*

(86) Internationale Anmeldenummer:
**PCT/EP2011/005815**

(87) Internationale Veröffentlichungsnummer:
**WO 2012/113421 (30.08.2012 Gazette 2012/35)**

(54) **VERFAHREN ZUM BETREIBEN EINES RESONANZMESSSYSTEMS**

METHOD FOR OPERATING A RESONANCE MEASURING SYSTEM

PROCÉDÉ POUR FAIRE FONCTIONNER UN SYSTÈME DE MESURE À RÉSONANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2010   DE 102010051738**
**25.02.2011   DE 102011012498**

(43) Veröffentlichungstag der Anmeldung:
**25.09.2013   Patentblatt 2013/39**

(73) Patentinhaber: **KROHNE Messtechnik GmbH**
**47058 Duisburg (DE)**

(72) Erfinder:
• **KOLAHI, Kourosh**
  **47051 Duisburg (DE)**
• **STORM, Ralf**
  **45131 Essen (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**EP-A2- 1 845 346     WO-A1-2010/085980**

EP 2 641 065 B1

**Beschreibung**

Die Erfindung betrifft ein Verfahren zum Betreiben eines Resonanzmesssystems, insbesondere in Form eines Coriolis-Massedurchflussmessgeräts oder in Form eines Dichtemessgeräts, wobei das Resonanzmesssystem wenigstens ein von einem Medium durchströmtes Messrohr, wenigstens einen Schwingungserzeuger, wenigstens einen Schwingungsaufnehmer und wenigstens eine Steuer- und Auswerteeinheit aufweist, wobei das Messrohr von dem Schwingungserzeuger zu einer Schwingung mit einer vorbestimmten Anregungsfrequenz und ersten Amplitude angeregt wird und über den wenigstens einen Schwingungsaufnehmer die resultierende Schwingung des Messrohrs erfasst wird. Die Erfindung betrifft darüber hinaus auch ein Resonanzmesssystem, insbesondere in Form eines Coriolis-Massedurchflussmessgeräts oder in Form eines Dichtemessgeräts, das mit dem vorgenannten Verfahren betrieben wird.

Resonanzmeßsysteme der vorgenannten Art sind seit vielen Jahren bekannt, nicht nur in Form von Coriolis-Massedurchflussmessgeräten, sondern auch als Dichtemessgeräte u. a. m. Diese Resonanzmesssysteme stehen mit einem Prozess in Verbindung, wobei sich Prozess und Resonanzmesssystem wechselseitig beeinflussen. Als Resonanzmesssysteme werden vorliegend ganz allgemein solche Systeme bezeichnet, bei denen Informationen über die zu bestimmenden Prozessgrößen (Messgrößen) in den Eigenfrequenzen verschlüsselt sind oder/und solche Systeme, bei denen Arbeitspunkte auf die Eigenfrequenzen des Meßsystems gelegt werden. Auf alle unter diese Definition fallenden Systeme sind die nachfolgenden Ausführungen anwendbar, sofern sie ein von einem Medium durchströmtes bzw. durchströmbares Messrohr aufweisen. Im Folgenden werden Resonanzmesssysteme am Beispiel von Coriolis-Massedurchflussmessgeräten behandelt, was nicht einschränkend zu verstehen ist.

Coriolis-Massedurchflussmessgeräte werden vor allem in der industriellen Prozessmesstechnik dort eingesetzt, wo mit hoher Genauigkeit Masseströme bestimmt werden müssen. Die Funktionsweise von Coriolis-Massedurchflussmessgeräten beruht darauf, dass wenigstens ein von einem Medium durchströmtes Messrohr - Schwingelement- von einem Schwingungserzeuger zu einer Schwingung angeregt wird, wobei das Masse behaftete Medium aufgrund der zwei orthogonalen Geschwindigkeiten - die der Strömung und die des Messrohres - hervorgerufenen Coriolis-Trägheitskraft auf die Wandung des Messrohrs rückwirkt. Diese Rückwirkung des Mediums auf das Messrohr führt zu einer Änderung der Messrohrschwingung im Vergleich zu dem undurchströmten Schwingungszustand des Messrohrs. Durch Erfassung dieser Besonderheiten der Schwingungen des durchströmten Messrohrs - Phasendifferenz und damit Zeitdifferenz zwischen Messrohrbereichen, die im undurchströmten Zustand des Messrohres in Phase schwingen - kann der Massedurchfluss durch das Messrohr mit hoher Genauigkeit bestimmt werden. Bei homogenen Medien können mit hochwertigen Coriolis-Massedurchflussmessgeräten Genauigkeiten von etwa 0,04 % vom Messwert erzielt werden, weshalb Coriolis-Massedurchflussmessgeräte häufig auch im eichpflichtigen Verkehr eingesetzt werden.

Wenn es heißt, dass das Messrohr von dem Schwingungserzeuger mit einer vorbestimmten Anregungsfrequenz und ersten Amplitude angeregt wird, dann ist mit der vorbestimmten Anregungsfrequenz üblicherweise die Eigenfrequenz einer vorbestimmten bzw. gewünschten Eigenform gemeint, in der das Messrohr schwingen soll. Die Anregungsfrequenz wird dann über eine Regelung stets nachgeführt und quasi vorgegeben, falls sich die mit der vorgegeben Eigenform korrespondierende Eigenfrequenz zeitlich ändert.

Die Coriolis-Massedurchflussmessgeräte im einphasigen Strömungsbetrieb - also bei einer Strömung eines physikalisch homogenen Mediums - auszeichnende hohe Genauigkeit und Zuverlässigkeit ist bei Mehrphasenströmungen ohne weiteres nicht zu halten und zu erzielen, es sind hier besondere Maßnahmen zu ergreifen, um Mehrphasenströmungen allein erkennen zu können; um die Detektion von Mehrphasenströmungen bei Coriolis-Massedurchflussmessgeräten geht es in der vorliegenden Erfindung.

Eine mehrphasige Strömung ist im allgemeinen Fall eine Strömung, die sich aus mindestens zwei Phasen mit unterschiedlichen physikalischen Eigenschaften zusammensetzt. Die Phasen können dabei entweder aus gleichen oder aus unterschiedlichen Materialien bestehen. Als Phasen werden homogene und räumlich begrenzte Bereiche bezeichnet. Als Beispiel sind Flüssigkeit-Feststoff-Strömungen, Gas-Flüssigkeit-Strömungen, Gas-Feststoff-Strömungen, Wasser-Dampf-Strömungen oder Wasser-Luft-Strömungen zu nennen.

Es ist bekannt, dass bei Anwendungen mit mehrphasigen Strömungen erhebliche Messunsicherheiten auftreten, so dass es von großem Interesse ist, dass Vorliegen von Mehrphasenströmungen zuverlässig detektieren zu können.

Aufgabe der vorliegenden Erfindung ist es daher, ein Verfahren zum Betreiben eines Coriolis-Massedurchflussmessgeräts und ein entsprechendes Coriolis-Massedurchflussmessgerät anzugeben, dass eine zuverlässige und möglichst einfache Detektion von Mehrphasenströmungen gestattet.

Das erfindungsgemäße Verfahren zum Betreiben eines Coriolis-Massedurchflussmessgeräts, bei dem die zuvor hergeleitete und aufgezeigte Aufgabe gelöst ist, ist zunächst dadurch gekennzeichnet, dass die Steuer- und Auswerteeinheit aus der erfassten resultierenden Schwingung wenigstens einen ersten Messwert für wenigstens eine bei Mehrphasigkeit des Mediums amplitudenabhängige Zustandsgröße ermittelt, dass das Messrohr von dem Schwingungserzeuger zu einer Schwingung mit der Anregungsfrequenz und einer von der ersten Amplitude verschiedenen zweiten Amplitude angeregt wird, die resultierende Schwingung des Messrohrs erfasst wird und die Steuer- und Auswerteeinheit aus der erfassten resultierenden Schwingung wenigstens einen zweiten Messwert für die bei Mehrphasigkeit des Mediums amplitudenabhängige Zustandsgröße ermittelt, und dass die Messwertabweichung wenigstens eines der ersten Messwerte von wenigstens einem der korrespondierenden zweiten Messwerte als Indikator für das Vorliegen einer Mehrphasenströmung herangezogen wird.

Der Erfindung liegt die Idee zugrunde, zur Erkennung einer Mehrphasenströmung bzw. von Mediumphasen solche Zustandsgrößen oder Parameter des Resonanzmesssystems zu nutzen, die bei Mehrphasigkeit des Mediums amplitudenabhängig sind, so dass bei Anregung des Messrohrs zu verschiedenen Schwingungen mit zwar gleicher Frequenz aber unterschiedlicher Amplitude - Mehrphasigkeit des Mediums vorausgesetzt - unterschiedliche Messwerte für die Zustandsgröße bzw. den Parameter erhalten werden, und über die erfasste Messwertabweichung eine Mehrphasenströmung erkannt werden kann.

Dies setzt selbstverständlich voraus, dass die Zustandsgröße bzw. der parameter bei Einphasigkeit des Mediums eine solche Amplitudenabhängigkeit nicht aufweist oder jedenfalls in einem unterscheidbaren Maße anders amplitudenabhängig ist als bei Vorliegen einer Mehrphasigkeit des Mediums.

Der ganz erhebliche Vorteil des Verfahrens liegt darin, dass praktisch keine konstruktiven Änderungen - beispielsweise in Form von zusätzlichen Sensoren - an bekannten Resonanzmesssystemen, z. B. in Form von Coriolis-Massedurchflussmessgeräten oder Dichtemessgeräten, vorgenommen werden müssen, um dieses Verfahren durchführen zu können, es bedarf lediglich einer Änderung in der Ansteuerung von bekannten Resonanzmesssystemen und der Implementierung des erfindungsgemäßen Auswerteverfahrens in der Steuer- und Auswerteeinheit, was aber vergleichsweise einfach möglich ist, da hier lediglich eine geeignete Messwerterfassung- und Auswertung vorgenommen werden muss.

Die Anregung des Messrohrs eines Coriolis-Massedurchflussmessgerätes zu einer Schwingung ist funktionsnotwendiges Grunderfordernis bei Coriolis-Massedurchflussmessgeräten, und die Regelung der Schwingung auf eine bestimmte Amplitude ist an sich bekannt und ist aus verschiedenen Gründen in üblichen Coriolis-Massedurchflussmessgeräten bereits integriert. Das erfindungsgemäße Verfahren gestattet es also, mit einem äußerst geringfügigen zusätzlichen Aufwand, eine Mehrphasenströmung zu detektieren, wodurch der Verwender eines Coriolis-Massedurchflussmessgeräts jedenfalls sicher entscheiden kann, ob sich ein Massedurchfluss- oder Dichtemesswert geändert hat, weil sich tatsächlich der Massedurchfluss oder die Dichte eines homogenen Mediums geändert haben oder aber veränderte Messwerte in dem Vorliegen einer Mehrphasenströmung begründet sind. Das Verfahren ist vollkommen unabhängig von dem Typ des Coriolis-Massedurchflussmessgeräts, insbesondere unabhängig davon, ob es sich um ein Coriolis-Massedurchflussmessgerät mit geraden oder gekrümmten Rohren handelt, mit einem, zweien oder mehr mit als zwei Messrohren usw. Es gibt auch interne Parameter bei einem Coriolis-Massedurchflussmessgerät, die amplitudenabhängig sind, zu nennen sind hier beispielsweise die Kopplungsfaktoren zwischen verschiedenen angeregten oder sich ergebenden Schwingungsmoden. Besonders geeignet sind hier in Zusammenhang mit der vorliegenden Erfindung die mit gleicher Phasenlage wirkenden Weg- und Beschleunigungskopplungen - häufig zusammengefasst in einem Kopplungsfaktor $k_{sb}$ -, wobei insbesondere die unterschiedlichen Beschleunigungen von Messrohrhälften durch eine asymmetrische Verteilung der schwingenden Massen verursacht wird.

Eine vorteilhafte Ausgestaltung des Verfahrens zeichnet sich dadurch aus, dass das Messrohr von dem Schwingungserzeuger zu einer Schwingung mit der Anregungsfrequenz und wenigstens einer weiteren, von der ersten Amplitude und von der zweiten Amplitude verschiedenen weiteren Amplitude angeregt wird, die resultierende Schwingung des Messrohrs erfasst wird und die Steuer- und Auswerteeinheit aus der erfassten resultierenden Schwingung wenigstens einen weiteren Messwert für die bei Mehrphasigkeit des Mediums amplitudenabhängige Zustandsgröße (x) ermittelt, und die Messwertabweichung wenigstens eines der ersten Messwerte und/oder wenigstens eines der zweiten Messwerte von wenigstens einem der korrespondierenden weiteren Messwerte als Indikator für das Vorliegen einer weiteren Mehrphasenströmung bzw. Mediumphase herangezogen wird. Es lässt sich demnach nicht nur unterscheiden, dass eine Mehrphasenströmung vorliegt bzw. mehrere Mediumphasen vorliegen, es lässt sich mit der beschriebenen Vorgehensweise auch unterscheiden, wie viele Phasen in der Strömung bzw. dem Medium vorliegen. Diese Erkenntnis wird bei einer Fortbildung des Verfahrens dahingehend eingesetzt, dass das Messrohr von dem Schwingungserzeuger zu Schwingungen mit der Anregungsfrequenz und so vielen verschiedenen Amplituden angeregt wird, bis keine weiteren Mehrphasenströmungen bzw. Mediumphasen mehr unterscheidbar sind, womit dann folglich die Anzahl der Mehrphasenströmungen bzw. Mediumphasen bestimmt ist.

Gemäß einer bevorzugten Ausgestaltung des erfindungsgemäßen Verfahrens ist vorgesehen, dass als bei Mehrphasigkeit des Mediums amplitudenabhängige Zustandsgrößen die Dichte des Mediums, der Massedurchfluss des Mediums durch das Messrohr oder die Eigenfrequenz des Messrohrs für eine bestimmte Eigenform verwendet werden. Jede dieser drei Zustandsgrößen zeigt eine Abhängigkeit von der Amplitude der Schwingung bei Mehrphasigkeit und praktisch keine Abhängigkeit von der Amplitude der Schwingung des Messrohrs bei Einphasigkeit der Strömung. Jede dieser Größen kann für sich alleine zur Detektion einer Mehrphasenströmung herangezogen werden, selbstverständlich können auch zwei oder alle drei dieser Größen erfasst und zur Detektion einer Mehrphasenströmung ausgewertet werden. Bei der mathematischen Beschreibung von Coriolis-Massedurchflussmessgeräten treten die Dichte des Mediums und der Massedurchfluss des Mediums durch das Messrohr eher als Parameter in Erscheinung und nicht als Zustandsgrößen des Systems im systemtheoretischen Sinne, gleichwohl beeinflussen sie den Zustand des Resonanzmesssystems; in diesem Sinne ist hier der Begriff "Zustandsgröße" zu verstehen.

Wenn es heißt, dass die Zustandsgröße bei Mehrphasigkeit des Mediums amplitudenabhängig ist, dann ist damit nicht nur eine direkte Abhängigkeit dieser Zustandsgröße von der maximalen Auslenkung des Messrohres gemeint, sondern jegliche Abhängigkeit, die durch die Änderung der Amplitude der Messrohrschwingung verursacht wird. Wenn die Amplitude einer Schwingung bei gleich bleibender Schwingfrequenz verändert wird, dann verändert sich selbstverständlich nicht nur die Auslenkung der Schwingung selbst, sondern auch die Geschwindigkeit der Schwingung (erste zeitliche Ableitung der Auslenkung) und die bei der Schwingung erreichten Beschleunigungen (zweite zeitliche Ableitung der Auslenkung). Gerade die Geschwindigkeit und die Beschleunigung des schwingenden Messrohres stehen in direktem Zusammenhang mit physikalischen Phänomenen, die bei Mehrphasenströmungen auftreten und die zur Detektierbarkeit der Mehrphasenströmung im Sinne der vorliegenden Erfindung führen. Die Strömungseigenschaften werden bei mehrphasigen Strömungen dadurch beeinträchtigt, dass die einzelnen Strömungsphasen aufgrund der Dichteunterschiede eine relative Bewegung zueinander aufweisen und dadurch die Einprägung der zur Dichte- und Durchflussmessung erforderlichen radialen Geschwindigkeiten nicht mehr definiert erfolgt. Daraus resultieren Diskrepanzen sowohl bei der Dichtemessung als auch bei der Durchflussmessung. Diese Effekte bringen es beispielsweise mit sich, dass Coriolis-Massedurchflussmessgeräte bei Luftblasen in der Strömung (z. B. Wasser) Dichtemesswerte über 1000 kg/m$^3$ anzeigen.

Bei einer weiteren vorteilhaften Ausgestaltung des erfindungsgemäßen Verfahrens ist vorgesehen, dass die ermittelte Messwertabweichung, also die Abweichung des ersten Messwertes - gemessen bei der Schwingung des Messrohrs mit der ersten Amplitude - von dem zweiten Messwert - gemessen bei der Schwingung des Messrohrs mit der zweiten Amplitude - mit einem vorgegebenen Schwellwert verglichen wird und bei Überschreitung des Schwellwertes das Vorliegen einer Mehrphasenströmung angezeigt wird, wie auch immer das Anzeigen der Mehrphasenströmung erfolgt (Ausgabe eines vom Bediener wahrnehmbaren Signals und/oder lediglich internes elektrisches Signal (setzen eines Flag) und/oder Übertragung einer geeigneten Feldbusnachricht an ein angeschlossenes Prozessleitsystem etc.).

Bevorzugt wird das Vorliegen einer Mehrphasenströmung erst indiziert, wenn die Auswertung von zwei verschiedenen amplitudenabhängigen Zustandsgrößen auf eine Mehrphasenströmung hinweist, wenn also beispielsweise die Auswertung zweier der zuvor genannten Zustandsgrößen Dichte, Massedurchfluss und Eigenfrequenz sich gleichzeitig in einer Weise ändern, die auf eine Mehrphasenströmung hinweist. Auf diese Weise kann die Zuverlässigkeit der Mehrphasenerkennung erhöht werden, da nicht fälschlicherweise eine tatsächliche Änderung des Massedurchflusses oder der Dichte, die zufällig koinzident mit einer Amplitudenänderung ist, als eine Mehrphasenströmung erkannt wird. Das Vorliegen einer Mehrphasenströmung wird also erst dann indiziert, wenn wenigstens zwei ermittelte Messwertabweichungen von zwei verschiedenen amplitudenabhängigen Zustandsgrößen gleichzeitig jeweils einen vorgegebenen Schwellwert überschreiten.

Dazu ergänzend oder alternativ kann das erfindungsgemäße Verfahren vorteilhaft so ausgeführt werden, dass das Messrohr von dem Schwingungserzeuger nacheinander zu einer Mehrzahl von Schwingungen mit unterschiedlicher Amplitude mit der Anregungsfrequenz angeregt wird und erst bei einer Mehrzahl von aufeinander folgenden Messwertabweichungen wenigstens eines vorangehenden Messwertes von wenigstens einem korrespondierenden nachfolgenden Messwert das Vorliegen einer Mehrphasenströmung indiziert wird. Dabei ist zu beachten, dass sich jedenfalls die Amplituden aufeinderfolgender Schwingungen jeweils voneinander unterscheiden müssen, es ist also nicht erforderlich, dass sich alle Amplituden insgesamt voneinander unterscheiden. Es kann beispielsweise mit zwei verschiedenen Amplitudenwerten gearbeitet werden, die sich alternierend ändern. Bei dieser Variante des Verfahrens kann eine Mehrphasenströmung ebenfalls mit großer Sicherheit erkannt werden, da der Fall ausgeschlossen ist, dass lediglich ein plötzlicher tatsächlicher Wechsel einer dieser Zustandsgrößen erfasst wird, da die Wahrscheinlichkeit wohl vernachlässigbar ist, dass sich auch nur eine der Zustandsgrößen genau in dem zeitlichen Muster ändert, mit dem auch die Amplituden der Messrohrschwingung verfahrensgemäß geändert werden.

Vorzugsweise wird als Anregungsfrequenz die niedrigste Resonanzfrequenz des Messrohrs gewählt. Durch Betrieb des Messrohrs in Resonanz können mit geringstem Energieaufwand die gewünschten Schwingungen erreicht werden. Die erforderliche Leistung ist dann insgesamt am Niedrigsten, wenn für die Schwingung des Messrohres insgesamt die niedrigste Resonanzfrequenz verwendet wird. Wenn hier von der Resonanzfrequenz des Messrohres die Rede ist, dann ist damit natürlich insgesamt das schwingfähige Gesamtsystem gemeint, dessen Hauptbestandteil jedoch das Messrohr darstellt.

Es hat sich insgesamt als vorteilhaft herausgestellt, wenn das erfindungsgemäße Verfahren so ausgeführt wird, dass die Zeit, für die die zweite, nachfolgende Amplitude beibehalten wird, nachdem von einer ersten, vorangehenden Amplitude auf die zweite, nachfolgende Amplitude umgeschaltet worden ist, zumindest so groß ist, dass die durch die Amplitudenumschaltung bedingten Ausgleichsvorgänge innerhalb des Coriolis-Massedurchflussmessgeräts abgeklungen sind. Transienten können hier verschiedene Ursachen haben und an verschiedenen Stellen in Erscheinung treten. Übergangsvorgänge können beispielsweise durch die Amplitudenregelung bedingt sein, sie können aber auch bedingt sein durch Übergangsvorgänge in bestimmten verwendeten elektronischen Komponenten. Es kann aus diesem Grund vorteilhaft sein, eine vorgegebene Amplitude der Messrohrschwingung wenigstens mehrere Sekunden beizubehalten und eine Messung erst gegen Ende dieses Zeitraums erfolgen zu lassen bzw. nur diejenigen Abtastwerte zu verwenden, die im eingeschwungenen Zustand des Systems erfasst worden sind.

Das erfindungsgemäße Verfahren ist auch deshalb besonders vorteilhaft, weil es problemlos parallel zur eigentlichen Durchflussmessung ausgeführt werden kann, da das Verfahren zur Detektion einer Mehrphasenströmung keinen von dem normalen Durchfluss-Messmodus abweichenden Detektions-Modus erfordert, sondern lediglich eine Amplitudenumschaltung der für die Durchflussmessung an sich zwingend erforderlichen Messrohrschwingung zu realisieren ist.

In einer weiteren Ausgestaltung wird das Verfahren zur Detektion einer Mehrphasenströmung nicht ständig simultan zur eigentlichen Durchflussmessung ausgeführt, sondern in größeren zeitlichen Abständen der Durchflussmessung dazugeschaltet, so dass eine regelmäßige Diagnose gewährleistet ist.

Die Erfindung betrifft ferner ein Resonanzmesssystem, insbesondere ein Coriolis-Massedurchflussmessgerät, mit der zuvor genannten gerätetechnischen Ausstattung, bei dem die Steuer- und Auswerteinheit ganz konkret so eingerichtet ist, dass das Resonanzmesssystem im Betrieb das vorbeschriebene erfindungsgemäße Verfahren zur Erkennung einer Mehrphasenströmung ausführen kann; die Steuer- und Auswerteeinheit ist dann so programmiert, dass das Resonanzmesssystem das Detektionsverfahren ausführen kann und nicht erst durch Umprogrammierung der Steuer- und Auswerteeinheit dazu in die Lage versetzt werden muss.

Im Einzelnen gibt es nun verschiedene Möglichkeiten, das erfindungsgemäße Verfahren zum Betreiben eines Resonanzmesssystems und das erfindungsgemäße Resonanzmesssystem auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1    die schematische Darstellung eines Resonanzmesssystems in Form eines an sich bekannten Coriolis-Massedurchflussmessgerätes mit verbundener und erfindungsgemäß ausgestalteter Steuer- und Auswerteeinheit,

Fig. 2    schematisch eine Luftblase in einem wassergefüllten Messrohrabschnitt,

Fig. 3    ein Diagramm mit Abweichungen von Messwerten, die bei verschiedenen Schwingungsamplituden bei verschieden ausgeprägter Mehrphasenströmung erfasst worden sind.

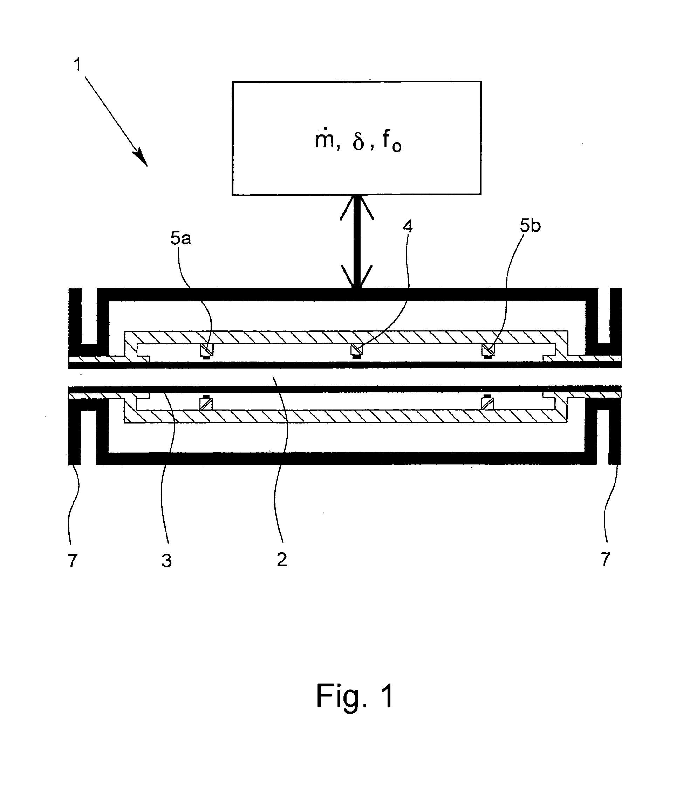

In Fig. 1 ist ganz schematisch dargestellt ein Resonanzmesssystem in Form eines konstruktiv dem Grunde nach bekannten Coriolis-Massedurchflussmessgeräts 1, das ein von einem Medium 2 durchströmbares Messrohr 3, einen Schwingungserzeuger 4 und Schwingungsaufnehmer 5a, 5b sowie eine Steuer- und Auswerteeinheit 6 aufweist. Die Schwingungsaufnehmer 5a, 5b müssen selbstverständlich nicht beidseitig des Messrohrs vorgesehen sein.

Das Messrohr 3 ist von dem Schwingungserzeuger 4 zu einer Schwingung mit einer vorbestimmten Anregungsfrequenz und einer ersten Amplitude anregbar, was bei Coriolis-Massedurchflussmessgeräten zur elementaren Durchführung der Durchflussmessung funktionsnotwendig gegeben sein muss. Die aus der Anregung resultierende Schwingung des Messrohrs 3 wird über die Schwingungsaufnehmer 5a, 5b erfasst, wobei sich aus der Phasendifferenz und damit der Zeitdifferenz zwischen der links- und rechtsseitigen Schwingung des Messrohrs 3 der Massedurchfluss durch das Messrohr 3 ergibt.

Die Steuer- und Auswerteeinheit 6 steht mit den mechanischen Teilen des Coriolis-Massedurchflussmessgeräts 1 dahingehend in Verbindung, dass die von der Steuer- und Auswerteeinheit 6 generierten Signale den Schwingungserzeuger 4 ansteuern, und die von den Schwingungsaufnehmern 5a, 5b erfassten Messsignale zu der Steuer- und Auswerteeinheit übermittelt werden können. Wie die Steuer- und Auswerteeinheit 6 im Einzelnen realisiert ist, ist für die weitergehende Darstellung unerheblich, es kann sich um eine einzige elektrische Baueinheit handeln, es kann sich aber auch um ein aus mehreren Komponenten bestehendes verteiltes System handeln, das alles ist vorliegend ohne Belang.

Das Coriolis-Massedurchflussmessgerät 1 ist über Flansche 7 mit einem Prozess und einem externen Rohrnetz verbindbar. Aus den durch die Schwingungsaufnehmer 5a, 5b erfassten Schwingungssignalen sind - geeignete Ansteuerungen des Messrohrs 3 vorausgesetzt - verschiedene interessierende Zustandsgrößen x des Gesamtsystems ermittelbar, neben der originär interessierenden Größe des Massedurchflusses $\dot{m}$ beispielsweise auch die Dichte $\rho$ des in dem Messrohr befindlichen Mediums und die Eigenfrequenzen $f_0$ des schwingungsfähigen Systems. Wie diese Größen im Einzelnen aus den Schwingungssignalen zu ermitteln sind, ist aus dem Stand der Technik hinreichend bekannt.

Die Steuer- und Auswerteeinheit 6 ist so eingerichtet, dass sie aus der erfassten resultierenden Schwingung - Schwingung mit der ersten Amplitude - einen ersten Messwert bzw. abgeleiteten Messwert $x_i$ für wenigstens eine bei Mehrphasigkeit des Mediums amplitudenabhängige Zustandsgröße x ermittelt. Das Messrohr 3 wird dann von dem Schwingungserzeuger 4 zu einer Schwingung mit einer von der ersten Amplitude verschiedenen zweiten Amplitude angeregt, und die resultierende Schwingung des Messrohrs 3 wird wiederum erfasst, woraufhin die Steuer- und Auswerteeinheit 6 aus der erfassten resultierenden Schwingung wenigstens einen zweiten Messwert bzw. abgeleiteten Messwert $x_j$ für die bei Mehrphasigkeit des Mediums amplitudenabhängige Zustandsgröße x ermittelt.

Durch die Amplitudenabhängigkeit der Zustandsgröße x ergibt sich bei Mehrphasigkeit der Strömung eine Abweichung zwischen dem ersten Messwert $x_i$ und dem zweiten Messwert $x_j$, so dass die Messwertabweichung als Indikator für das Vorliegen einer Mehrphasenströmung herangezogen wird.

Wie Fig. 1 zu entnehmen ist, ist dieses Verfahren mit jedem herkömmlichen Coriolis-Massedurchflussmessgerät durchführbar, sofern die beschriebene verfahrensmäßige Ansteuerung und Auswertung durch die Steuer- und Auswerteeinheit 6 vorgesehen ist; einer konstruktiven Modifikation des Coriolis-Massedurchflussmessgeräts 1 bedarf es dazu nicht.

Als amplitudenabhängige Zustandsgrößen werden bei dem in Fig. 1 dargestellten Coriolis-Massedurchflussmessgerät 1 die Dichte $\rho$ des Mediums 2 und der Massedurchfluss $\dot{m}$ des Mediums 2 durch das Messrohr 3 verwendet. Bei anderen Ausführungsbeispielen werden nicht (nur) die vorgenannten externen Größen herangezogen, sondern alternativ oder auch zusätzlich interne Größen des Coriolis-Massedurchflussmessgeräts wie beispielsweise die Zeitdifferenz der beiden Messrohrhälften, die Schwingfrequenz und die Asymmetrie des Massenbelags der Messrohrhälften.

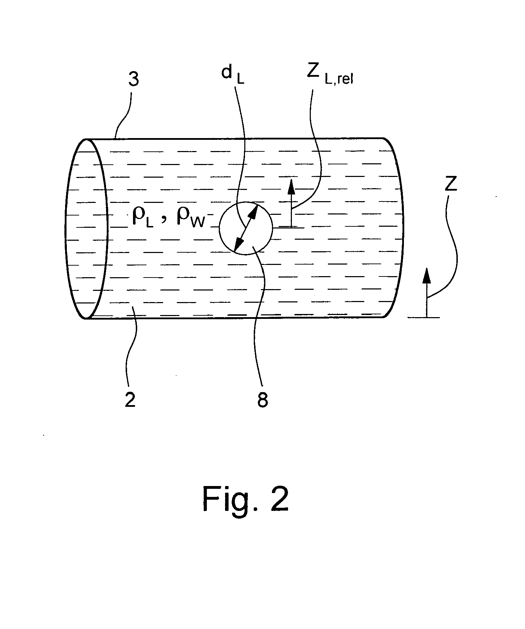

Wie bereits eingangs erläutert worden ist, sind die wesentlichen Ursachen für das Auftreten von Messunsicherheiten bei Mehrphasenströmung Sekundärströmungen im Messrohr 3, die durch verschiedene Dichten der mehrphasigen Strömungen versucht werden. Dieser Zusammenhang soll anhand von Fig. 2 erläutert werden. In Fig. 2 ist dargestellt eine sphärische Luftblase 8 in der Mitte eines wassergefüllten Messrohres 3. Die Luftblase 8 hat den Durchmesser $d_L$ und weist unter den gegebenen Temperatur- und Druckbedingungen die Dichte $\rho_L$ auf; das Wasser hat entsprechend die Dichte $\rho_W$. Wenn das Messrohr 3 durch einen hier nicht dargestellten Schwingungserzeuger zu transversalen Schwingungen in seiner ersten Eigenform beschleunigt wird, wirken auf die Luftblase 8 verschiedene Kräfte. Werden hier der Einfachheit halber die Schwerkraft und die Kompressibilität der Luftblase außer Acht gelassen, lautet das Kräftegleichgewicht für die Luftblase:

$$\underbrace{\rho_L V_L \ddot{z}_{L,rel}}_{1} + \underbrace{\frac{1}{2} C_{D\rho W} A_L \dot{z}^2_{L,rel}}_{2} + \underbrace{C_{a\rho W} V_L \ddot{z}_{L,rel}}_{3} = \underbrace{(\rho_W - \rho_L) V_L \ddot{z}_1}_{4} .$$

In dieser Gleichung sind:

| | |
|---|---|
| $\ddot{Z}_1$ | Beschleunigung des Messrohrs |
| $\dot{Z}_{L,rel}$ | Relativgeschwindigkeit der Luftblase |
| $\ddot{Z}_{L,rel}$ | Relativbeschleunigung der Luftblase |
| $\rho_L, \rho_W$ | Luftblasendichte, Wasserdichte |
| $V_L$ | Luftblasenvolumen |
| $d_L$ | Luftblasendurchmesser |
| $A_L$ | Luftblasenquerschnitt |
| $C_D$ | Widerstandkoeffizient |
| $C_a$ | "Virtuelle Masse" Koeffizient |

In der angegebenen Gleichung kommt zum Ausdruck, dass die auf die Luftblase 8 übertragenen äußeren Kräfte (rechte Seite der Gleichung, Ausdruck 4) im Gleichgewicht stehen mit den auf die Luftblase 8 wirkenden inneren Reaktionskräften, nämlich der Trägheitskraft der Luftblasenmasse (Ausdruck 1), der Widerstandskraft aufgrund der Bewegung der Luftblase innerhalb des Mediums 2 (Ausdruck 2) und die Trägheitskraft der sog. "virtuellen Masse" (Ausdruck 3). Die virtuelle Masse berücksichtigt, dass die von der Luftblase verdrängte Mediummasse ebenfalls beschleunigt werden muss. Zu beachten ist hier, dass die Kräfte formuliert sind auf Grundlage der Relativbewegung der Luftblase im Wasser ($z_{L,rel}$).

Der Gleichung ist entnehmbar, dass die Luftblase 8 bezüglich des Wassers 2 eine Relativbewegung ausführt, was sich anschaulich erklären lässt, wenn die durch die Anregung des Messrohres 3 verliehene Beschleunigung als Erdbeschleunigung aufgefasst wird. Die Trägheitsbeschleunigung der Luftblase entspricht in diesem Fall dann folglich der Erdbeschleunigung. Genau wie sich die Luftblase im Schwerefeld der Erde entgegen der Schwerkraft nach oben bewegt, wandert die Luftblase im Falle des beschleunigten Messrohres entgegen der Trägheitsbeschleunigung. Ursache für dieses Verhalten ist der Dichteunterschied zwischen der Luftblase 8 und dem umgebenden Medium 2. Da die Luftblase 8 dem Medium 2 in der Schwingung vorauseilt, verdrängt sie das vor ihr liegende Wasser, das in einer entgegengesetzten Bewegung mit der Relativgeschwindigkeit $\dot{z}_{L,rel}$ der Luftblase 8 zurückströmt. Im Ergebnis ist jedenfalls festzustellen, dass bei einer Mehrphasenströmung durch die erzwungene Schwingung des Messrohres 3 eine gerichtete radiale Relativbewegung in der Strömung auftritt, die von der Amplitude der erzwungenen Auslenkung (nämlich von der sich daraus ergebenden Geschwindigkeit und Beschleunigung der Messrohrbewegung) abhängt und zu den zu detektierenden und durch das erfindungsgemäße Verfahren detektierten amplitudenabhängigen Messwerten führt.

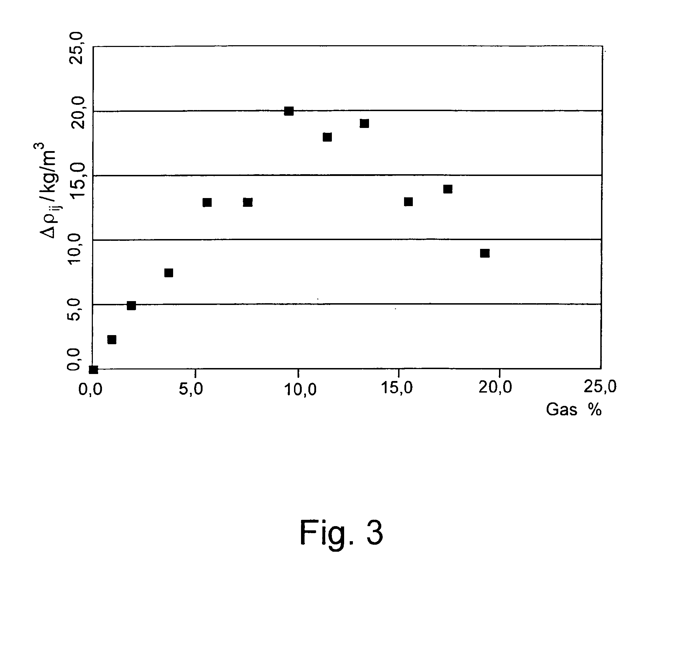

In Fig. 3 sind Messergebnisse dargestellt, nämlich die Messwertabweichungen $\Delta\rho_{ij}$ von Dichtemesswerten $\rho_i$ und $\rho_j$ über dem Luftanteil (Gas %) in einer Wasserströmung, wobei sich die Amplituden der ersten Schwingung und der zweiten Schwingung des Messrohrs 3 um etwa 33 % unterschieden. Es ist deutlich zu erkennen, dass bei einer einphasigen Strömung (Gasanteil 0 %) keine Messdifferenz bei unterschiedlichen Amplituden vorliegt, die Messdifferenz bei Mehrphasenströmung jedoch deutlich in Erscheinung tritt und daher eine geeignete Indikatorgröße zur Detektion einer Mehrphasenströmung ist.

## Patentansprüche

1.  Verfahren zum Betreiben eines Resonanzmesssystems (1), insbesondere in Form eines Coriolis-Massedurchflussmessgeräts oder in Form eines Dichtemessgeräts, wobei das Resonanzmesssystem (1) wenigstens ein von einem Medium (2) durchströmtes Messrohr (3), wenigstens einen Schwingungserzeuger (4), wenigstens einen Schwingungsaufnehmer (5a, 5b) und wenigstens eine Steuer- und Auswerteeinheit (6) aufweist, wobei das Messrohr (3) von dem Schwingungserzeuger (4) zu einer Schwingung mit einer vorbestimmten Anregungsfrequenz und ersten Amplitude angeregt wird und über den wenigstens einen Schwingungsaufnehmer (5a, 5b) die resultierende Schwingung des Messrohrs (3) erfasst wird,

    **dadurch gekennzeichnet,**
    dass die Steuer- und Auswerteeinheit (6) aus der erfassten resultierenden Schwingung wenigstens einen ersten Messwert ($x_i$) für wenigstens eine bei Mehrphasigkeit des Mediums (2) amplitudenabhängige Zustandsgröße ($x$) ermittelt,
    dass das Messrohr (3) von dem Schwingungserzeuger (4) zu einer Schwingung mit der Anregungsfrequenz und einer von der ersten Amplitude verschiedenen zweiten Amplitude angeregt wird, die resultierende Schwingung des Messrohrs (3) erfasst wird und die Steuer- und Auswerteeinheit (6) aus der erfassten resultierenden Schwingung wenigstens einen zweiten Messwert ($x_j$) für die bei Mehrphasigkeit des Mediums (2) amplitudenabhängige Zustandsgröße ($x$) ermittelt,
    und dass die Messwertabweichung ($\Delta x_{ij}$) wenigstens eines der ersten Messwerte ($x_i$) von wenigstens einem der korrespondierenden zweiten Messwerte ($x_j$) als Indikator für das Vorliegen einer Mehrphasenströmung herangezogen wird.

2.  Verfahren nach Anspruch 1, **dadurch gekennzeichnet, dass** das Messrohr (3) von dem Schwingungserzeuger (4) zu einer Schwingung mit der Anregungsfrequenz und wenigstens einer weiteren, von der ersten Amplitude und von der zweiten Amplitude verschiedenen weiteren Amplitude angeregt wird, die resultierende Schwingung des Messrohrs (3) erfasst wird und die Steuer- und Auswerteeinheit (6) aus der erfassten resultierenden Schwingung wenigstens einen weiteren Messwert für die bei Mehrphasigkeit des Mediums (2) amplitudenabhängige Zustandsgröße ($x$) ermittelt, und die Messwertabweichung wenigstens eines der ersten Messwerte und/oder wenigstens eines der zweiten Messwerte von wenigstens einem der korrespondierenden weiteren Messwerte ($x_j$) als Indikator für das Vorliegen einer weiteren Mehrphasenströmung bzw. Mediumphase herangezogen wird.

3.  Verfahren nach einem der Ansprüche 1 bis 3, **dadurch gekennzeichnet, dass** das Messrohr (3) von dem Schwingungserzeuger (4) zu Schwingungen mit der Anregungsfrequenz und so vielen verschiedenen Amplitude angeregt wird, bis keine weiteren Mehrphasenströmungen bzw. Mediumphasen mehr unterscheidbar sind, damit also die Anzahl der Mehrphasenströmungen bzw. Mediumphasen bestimmt ist.

4.  Verfahren nach einem der Ansprüche 1 bis 3, **dadurch gekennzeichnet, dass** als bei Mehrphasigkeit des Mediums (2) amplitudenabhängige Zustandsgröße ($x$) die Dichte ($\rho$) des Mediums (2) und/oder der Massedurchfluss m des Mediums (2) durch das Messrohr (3) und/oder die Eigenfrequenz $f_0$ des Messrohrs (3) für eine bestimmte Eigenform verwendet wird/werden.

5.  Verfahren nach einem der Ansprüche 1 bis 4, **dadurch gekennzeichnet, dass** die ermittelte Messwertabweichung ($\Delta x_{ij}$) mit einem vorgegebenen Schwellwert verglichen wird und bei Überschreitung des Schwellwertes das Vorliegen einer Mehrphasenströmung indiziert wird.

6.  Verfahren nach einem der Ansprüche 1 bis 5, **dadurch gekennzeichnet, dass** das Vorliegen einer Mehrphasenströmung erst indiziert wird, wenn wenigstens zwei ermittelte Messwertabweichungen ($\Delta x_{ij}$) von zwei verschiedenen amplitudenabhängige Zustandsgröße ($x$) gleichzeitig jeweils einen vorgegebenen Schwellwert überschreiten.

**7.** Verfahren nach einem der Ansprüche 1 bis 6, **dadurch gekennzeichnet, dass** das Messrohr (3) von dem Schwingungserzeuger (4) nacheinander zu einer Mehrzahl von Schwingungen mit der ersten Frequenz angeregt wird, wobei sich die Amplituden aufeinander folgender Schwingungen jeweils voneinander unterscheiden, und erst bei einer Mehrzahl von aufeinander folgenden Messwertabweichungen wenigstens eines vorangehenden Messwertes von wenigstens einem korrespondierenden nachfolgenden Messwerte das Vorliegen einer Mehrphasenströmung indiziert wird.

**8.** Verfahren nach einem der Ansprüche 1 bis 7, **dadurch gekennzeichnet, dass** als Anregungsfrequenz die niedrigste Resonanzfrequenz ($f_0$) des Messrohrs (3) gewählt wird.

**9.** Verfahren nach einem der Ansprüche 1 bis 8, **dadurch gekennzeichnet, dass** die Zeit, für die die zweite, nachfolgende Amplitude beibehalten wird, nachdem von einer ersten, vorangehenden Amplitude auf die zweite, nachfolgende Amplitude umgeschaltet worden ist, zumindest so groß ist, dass die durch die Amplitudenumschaltung bedingten Ausgleichsvorgänge innerhalb des Resonanzmesssystems abgeklungen sind.

**10.** Verfahren nach einem der Ansprüche 1 bis 9, **dadurch gekennzeichnet, dass** das Verfahren zur Detektion einer Mehrphasenströmung simultan zur eigentlichen Durchflussmessung und/oder Dichtemessung ausgeführt wird.

**11.** Resonanzmesssystem (1), insbesondere in Form eines Coriolis-Massedurchflussmessgeräts oder in Form eines Dichtemessgeräts, mit wenigstens einem von einem Medium (2) durchströmbaren Messrohr (3), wenigstens einem Schwingungserzeuger (4), wenigstens einem Schwingungsaufnehmer (5a, 5b) und wenigstens einer Steuer- und Auswerteeinheit (6), wobei das Messrohr (3) von dem Schwingungserzeuger (4) zu einer Schwingung mit einer vorbestimmten Anregungsfrequenz und ersten Amplitude anregbar ist und über den wenigstens einen Schwingungsaufnehmer (5a, 5b) die resultierende Schwingung des Messrohrs (3) erfassbar ist,
**dadurch gekennzeichnet,**
dass die Steuer- und Auswerteeinheit (6) ganz konkret so eingerichtet ist, dass das Resonanzmesssystem (1) im Betrieb das Verfahren nach einem der Ansprüche 1 bis 10 ausführt.

## Claims

**1.** Method for operating a resonance measuring system (1), in particular in the form of a Coriolis mass flowmeter or in the form of a density measuring unit, wherein the resonance measuring system (1) has at least one measuring tube (3) with a medium (2) flowing through it, at least one oscillation generator (4), at least one oscillation sensor (5a, 5b) and at least one control and evaluation unit (6), wherein the measuring tube (3) is excited by the oscillation generator (4) to an oscillation with a predetermined excitation frequency and a first amplitude and the resulting oscillation of the measuring tube (3) is detected by at least one oscillation sensor (5a, 5b)
**characterized in**
that the control and evaluation unit (6) determines at least one first measured value ($x_i$) for at least one state variable (x) dependent on the amplitude in a multi-phase medium (2),
that the measuring tube (3) is excited by the oscillation generator (4) to an oscillation with the excitation frequency and a second amplitude differing from the first amplitude, that the resulting oscillation of the measuring tube (3) is detected and the control and evaluation unit (6) determines at least a second measured value ($x_j$) for the state variable (x) dependent on the amplitude in a multi-phase medium (2) from the determined resulting oscillation,
and that the deviation ($\Delta x_{ij}$) of at least one of the first measured value ($x_i$) from at least one of the corresponding second values ($x_j$) is used as an indicator for the presence of a multi-phase flow.

**2.** Method according to claim 1, **characterized in that** the measuring tube (3) is excited by the oscillation generator (4) to an oscillation with the excitation frequency and at least one further amplitude differing from the first amplitude and the second amplitude, that the resulting oscillation of the measuring tube (3) is detected and the control and evaluation unit (6) determines at least one additional measured value for the state variable (x) dependent on the amplitude for a multi-phase medium (2) from the detected, resulting oscillation and that deviations in the measured values of at least one of the first measured value and/or at least one of the second measured value is used by at least one of the corresponding further measured values ($x_j$) as an indicator for the presence of a further multi-phase flow or, respectively, medium phase.

**3.** Method according to claim 1 or 2, **characterized in that** the measuring tube (3) is excited by the oscillation generator (4) to oscillations with the excitation frequency and, in this manner, many different amplitudes are excited until further multi-phase flows or medium phases can no longer be differentiated, thus the number of multi-phase flows or medium phases is determined with this.

4. Method according to any one of claims 1 to 3, **characterized in that** the density (p) of the medium (2) and/or the mass flow $\dot{m}$ of the medium (2) through the measuring tube (3) and/or the eigenfrequency $f_0$ of the measuring tube (3) is/are used as a state variable (x) for a certain eigenform dependent on the amplitude in a multi-phase medium (2).

5. Method according to any one of claims 1 to 4, **characterized in that** the determined measured value deviation ($\Delta x_{ij}$) is compared to a predetermined threshold value and the presence of a multi-phase flow is indicated when the threshold value is exceeded.

6. Method according to any one of claims 1 to 5, **characterized in that** the presence of a multi-phase flow is first indicated when at least two determined measured value deviations ($\Delta x_{ij}$) from two different state variables (x) dependent on amplitude exceed a predetermined threshold value at the same time.

7. Method according to any one of claims 1 to 6, **characterized in that** the measuring tube (3) is excited by the oscillation generator (4) successively to a number of oscillations with the first frequency, wherein the amplitudes of oscillations following one another differ from one another and the presence of a multi-phase flow is first indicated at a number of measured value deviations following one another of at least one previous measured value from at least one corresponding subsequent measured value.

8. Method according to any one of claims 1 to 7, **characterized in that** the lowest resonance frequency ($f_0$) of the measuring tube (3) is chosen as the excitation frequency.

9. Method according to any one of claims 1 to 8, **characterized in that** the time for which the second, subsequent amplitude is maintained after it has been switched from a first, previous amplitude to the second, subsequent amplitude, is at least so long that the adjustment process within the resonance measuring system caused by the amplitude switch has ceased.

10. Method according to any one of claims 1 to 9, **characterized in that** the method for detecting a multi-phase flow is carried out at the same time as the actual flow measurement and/or density measurement.

11. Resonance measuring system (1), in particular in the form of a Coriolis mass flowmeter or in the form of a density measuring unit having at least one measuring tube (3) with a medium (2) flowing through it, at least one oscillation generator (4), at least one oscillation sensor (5a, 5b) and at least one control and evaluation unit (6), wherein the measuring tube (3) can be excited by the oscillation generator (4) to an oscillation with a predetermined excitation frequency and a first amplitude and the resulting oscillation of the measuring tube (3) can be detected by at least one oscillation sensor (5a, 5b)
**characterized in**
that the control and evaluation unit (6) is specifically designed in such a manner that the Coriolis mass flowmeter (1) carries out the method according to any one of claims 1 to 10 during operation.

**Revendications**

1. Procédé de conduite d'un système (1) de mesure par résonance qui présente en particulier la forme d'un appareil de mesure de débit massique par effet Coriolis ou la forme d'un appareil de mesure de masse spécifique, le système (1) de mesure par résonance présentant
au moins un tube de mesure (3) traversé par un fluide (2),
au moins un oscillateur (4), au moins un enregistreur d'oscillations (5a, 5b) et
au moins une unité (6) de commande et d'évaluation,
le tube de mesure (3) étant excité à vibrer à une fréquence d'excitation prédéterminée et une première amplitude par l'oscillateur (4) et la vibration résultante du tube de mesure (3) étant saisie par l'intermédiaire du ou des enregistreurs de vibrations (5a, 5b),
**caractérisé en ce que**
à partir de la vibration résultante saisie, l'unité (6) de commande et d'évaluation détermine au moins une première valeur de mesure ($x_i$) d'au moins une grandeur d'état (x) qui dépend de l'amplitude lorsque le fluide (2) est polyphasique,

**en ce que** le tube de mesure (3) est excité par l'oscillateur (4) à vibrer à une fréquence d'excitation d'une deuxième amplitude qui diffère de la première amplitude, la vibration résultante du tube de mesure (3) est saisie et à partir de la vibration résultante saisie, l'unité (6) de commande et d'évaluation détermine au moins une deuxième valeur de mesure ($x_j$) d'une grandeur d'état (x) qui dépend de l'amplitude lorsque le fluide (2) est multiphasique et

**en ce que** l'écart ($\Delta x_{ij}$) entre au moins l'une des premières grandeurs de mesure ($x_i$) et au moins l'une des deuxièmes valeurs de mesure ($x_j$) correspondante intervient comme indicateur de la présence d'un écoulement polyphasique.

2.  Procédé selon la revendication 1, **caractérisé en ce que** le tube de mesure (3) est excité par l'oscillateur (4) à vibrer à la fréquence d'excitation et à au moins une autre amplitude qui diffère de la première amplitude et de la deuxième amplitude, la vibration résultante du tube de mesure (3) étant saisie et l'unité (6) de commande et d'évaluation déterminant à partir de la vibration résultante saisie au moins une autre valeur de mesure de la grandeur d'état (x) qui dépend de l'amplitude au cas où le fluide (2) est polyphasique, l'écart entre au moins l'une des premières valeurs de mesure et/ou au moins l'une des deuxièmes valeurs de mesure par rapport à au moins l'une des autres valeurs de mesure ($x_j$) correspondantes intervenant comme indicateur de la présence d'un deuxième écoulement polyphasique ou d'une deuxième phase du fluide.

3.  Procédé selon l'une des revendications 1 à 3, **caractérisé en ce que** le tube de mesure (3) est excité par l'oscillateur (4) à vibrer à la fréquence d'excitation et à un nombre d'amplitudes différentes suffisamment grand pour qu'aucun autre écoulement polyphasique ou phase du fluide ne puisse encore être distingué, pour ainsi déterminer le nombre d'écoulements polyphasiques ou de phases du fluide.

4.  Procédé selon l'une des revendications 1 à 3, **caractérisé en ce qu'**au cas où le fluide (2) est polyphasique, la grandeur d'état (x) dépendant de l'amplitude est la masse spécifique (p) du fluide (2), le débit massique m du fluide (2) dans le tube de mesure (3) et/ou la fréquence propre $f_0$ du tube de mesure (3) pour une forme propre définie.

5.  Procédé selon l'une des revendications 1 à 4, **caractérisé en ce que** l'écart ($\Delta x_{ij}$) déterminé entre les valeurs de mesure est comparé à une valeur de seuil prédéterminée, un dépassement de la valeur de seuil indiquant la présence d'un écoulement polyphasique.

6.  Procédé selon l'une des revendications 1 à 5, **caractérisé en ce que** la présence d'un écoulement polyphasique n'est indiquée que si au moins deux écarts déterminés ($\Delta x_{ij}$) entre les valeurs de mesure de deux grandeurs d'état (x) différentes dépendant de l'amplitude dépassent simultanément une valeur de seuil prédéterminée.

7.  Procédé selon l'une des revendications 1 à 6, **caractérisé en ce que** le tube de mesure (3) est excité par l'oscillateur (4) successivement en plusieurs vibrations à la première fréquence, les amplitudes de vibrations successives étant différentes les unes des autres, la présence d'un écoulement polyphasique n'étant indiquée qu'après plusieurs écarts successifs entre au moins une valeur de mesure précédente et au moins une valeur de mesure suivante correspondante.

8.  Procédé selon l'une des revendications 1 à 7, **caractérisé en ce que** la fréquence d'excitation sélectionnée est la plus basse fréquence de résonance ($f_0$) du tube de mesure (3).

9.  Procédé selon l'une des revendications 1 à 8, **caractérisé en ce que** la durée pendant laquelle la deuxième amplitude successive est maintenue après la commutation sur la deuxième amplitude qui suit la première amplitude précédente est au moins suffisamment grande pour que les processus d'équilibrage provoqués par la commutation d'amplitude dans le système de mesure par résonance se soient atténués.

10. Procédé selon l'une des revendications 1 à 9, **caractérisé en ce que** le procédé de détection d'un écoulement polyphasique est exécuté en même temps qu'une mesure proprement dite de débit et/ou une mesure de masse spécifique.

11. Système (1) de mesure par résonance qui présente en particulier la forme d'un appareil de mesure de débit massique par effet Coriolis ou la forme d'un appareil de mesure de masse spécifique, le système (1) de mesure par résonance présentant

au moins un tube de mesure (3) traversé par un fluide (2),
au moins un oscillateur (4), au moins un enregistreur d'oscillations (5a, 5b) et
au moins une unité (6) de commande et d'évaluation,
le tube de mesure (3) étant excité à vibrer à une fréquence d'excitation prédéterminée et une première amplitude par l'oscillateur (4) et la vibration résultante du tube de mesure (3) étant saisie par l'intermédiaire du ou des enregistreurs de vibrations (5a, 5b),

**caractérisé en ce que**

l'unité (6) de commande et d'évaluation est conçue concrètement pour que le système (1) de mesure par résonance exécute en fonctionnement le procédé selon l'une des revendications 1 à 10.

Fig. 1

Fig. 2

Fig. 3